# EUROPEAN PATENT APPLICATION

(11) **EP 1 510 946 A1**
(43) Date of publication of application: **02.03.2005**
(21) Application number: 04104081.7
(22) Date of filing: 25.08.2004
(51) Int. Cl.: G06F 17/30, H04M 1/725

(54) **System and method for mobile information discovery**

(30) Priority: 29.08.2003 GB 0320254
(71) Applicant: International Business Machines Corporation, Armonk, N.Y. 10504 (US)
(72) Inventor: Jacovi, Michal, Winchester, Hampshire S021 2JN (GB); Laakso, Terho, Winchester, Hampshire S021 2JN (GB); Maarek, Yoelle, Winchester, Hampshire S021 2JN (GB); Rosen, Sagee, Winchester, Hampshire S021 2JN (GB); Soroka, Vladimir, Winchester, Hampshire S021 2JN (GB); Ur, Sigalit, Winchester, Hampshire S021 2JN (GB)
(74) Representative: Watson, Justine Nicola C.

(57) **Abstract**

A system and a method of mobile information discovery are provided in which a mobile device (100) is used which has a display means (102) and an input means (104). A server (202) manages an information request (106) sent from the mobile device (100). The information request (106) is input once into the mobile device (100) and is capable of being sent singly or in parallel to a choice of multiple information discovery channels (108, 110, 112) managed by the server (202). The multiple information discovery channels (108, 110, 112) can include search means, messaging means and discussion means. The server (202) includes storage means (209) for the results of the information request (106) and means for returning the results to the mobile device (100). The mobile device (100) has connection means for connection to the server (202) wherein the connection means supports a persistent connection to a network.

## Description

This invention relates to the field of mobile information discovery. In particular, the invention relates to the use of a mobile device (eg mobile telephone) for information discovery and collaboration.

The mobile workforce of large companies, be they sales force or field force, continues growing. Mobile workers attend meetings, visit customers, and, while they are on the road, the mobile workers need constant access to their main sources of information. While laptops can provide this service, they are often awkward to use while in informal settings, e.g. airports, one-on-one discussions, etc.

In contrast, cellular or mobile phones are more and more pervasive and are always to hand. It is arguable that, for this reason, mobile phones are the best candidates to become information appliances. However, the disadvantage of mobile phones is their limited form factor. They have a small screen and a keypad rather than keyboard or touch screen. Also, the limited attention span of mobile workers makes mobile phones hard to use as a medium for information discovery.

Information discovery is typically achieved in two manners, either by discussing with people - via chat or phone conversations - or by searching information repositories. Most existing solutions propose a portfolio of applications for this purpose. These applications applied in the mobile context include the following: Short Message Service (SMS) instant messaging is often used to ask questions in one-on-one interactions; long menus can be browsed via WAP communications; and chat applications can mimic desktop chat experience. All these applications address parts of the problem of mobile information discovery, but are mostly intended for social usage.

Some mobile search technologies have been developed for mobile devices and these streamline the search process and target appropriate web pages. Predictive typing techniques have been used to increase the speed of input of a keyword query to alleviate the time restraints of inputting text information requests into a mobile device.

According to a first aspect of the present invention there is provided a system of mobile information discovery comprising: a mobile device including a display means and an input means; a server for managing an information request sent from the mobile device; wherein an information request input once into the mobile device is capable of being sent singly or in parallel to a choice of multiple information discovery channels managed by the server; the server includes storage means for results of the information request and means for returning the results to the mobile device.

Preferably a unified means of information discovery using a mobile communication device such as a mobile phone is provided. Multiple information discovery channels are preferably combined in a common front end with the channels operating singly or in parallel. The user preferably expresses his/her information needs in free text only once.

Preferably, the mobile device has connection means for connection to the server wherein the connection means supports a persistent connection to a network.

The multiple information discovery channels may be search means, messaging means and discussion means and the multiple information discovery channels may obtain information from information resources in the form of people and data repositories.

Preferably, the input means enables textual inputs and the information request is input in the form of free text.

The mobile device may be a mobile phone with a client application for processing the information request. The server may be a knowledge management server connected by a network to information resources.

The server may use push technology to return the results to the mobile device. The results may be in the form of search results, return messages and threads in a discussion.

According to a second aspect of the present invention there is provided a method of mobile information discovery comprising: inputting an information request once into a mobile device; selecting one or more forms of information discovery channel by which to process the information request from a multiple of information discovery channels, the information request being sent singly or in parallel to the information discovery channels; the information request being managed by and the results stored in a server; and the results being returned to the mobile device.

Preferably, the mobile device is connected to the server by a connection means which supports a persistent connection.

Preferably, the information request is input in the form of free text.

The multiple information discovery channels may be search, messaging and discussion. The method may include selecting one or more information resource to which the information request is to be sent for each selected information discovery channel. If the information discovery channel is a search, the information repositories through which the search is to be conducted may be selected by input into the mobile device. If the information discovery channel is messaging, the information resources in the form of people may be selected by input into the mobile device. If the information discovery channel is discussion, the information resources in the form of discussion forums may be selected by input into the mobile device.

An indication of a result may be sent to the mobile device followed by the result when requested. The results may be pushed by the server to the mobile device. The results may be in the form of search results, return messages and threads in a discussion.

The server may receive an information request from the mobile device, may process the information request by sending it by means of the selected information discovery channels to the selected information resources, and the server may receive, manage and return results of the information request to the mobile device.

Embodiments of the present invention will now be described, by way of examples only, with reference to the accompanying drawings in which:

Figure 1 is a schematic diagram of an information discovery system operable from a mobile device in accordance with a preferred embodiment of the present invention;

Figure 2 is a block diagram of an information discovery system in accordance with a preferred embodiment of the present invention;

Figure 3 is a flow diagram of the operation of a client application in accordance with a preferred embodiment of the present invention;

Figure 4 is a flow diagram of the operation of a server in accordance with a preferred embodiment of the present invention;

Figure 5 is a schematic diagram of the interrelation between the client application and the server in accordance with a preferred embodiment of the present invention; and

Figure 6 is a showing a mobile device and user interface in accordance with a preferred embodiment of the present invention.

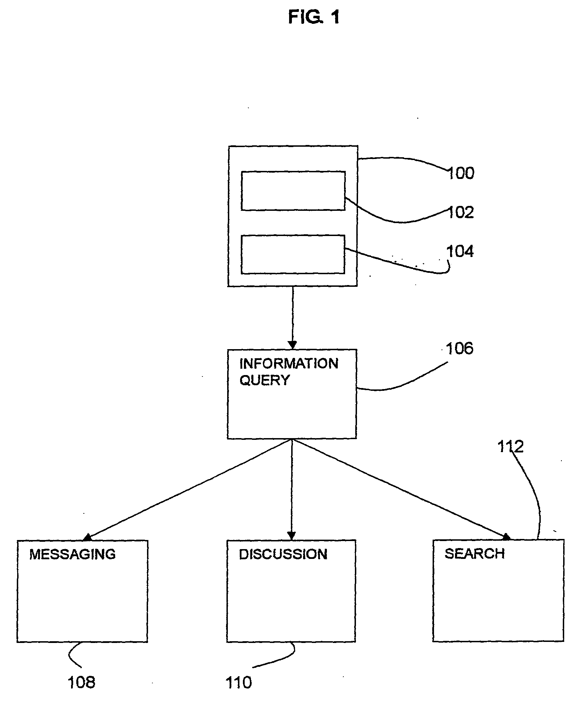

Referring to Figure 1, there is provided a mobile device 100. The mobile device 100 is a handheld apparatus which has a user interface 102 and an input mechanism 104, for example a key pad. The mobile device 100 has communication means such that it can access a telephone or data network. The mobile device 100 can be a mobile or cellular telephone, a personal digital assistant (PDA) or other form of handheld device with communication means.

The communication means of the mobile device 100 supports a persistent connection to a network. For example, General Packet Radio Services (GPRS) is a service which supports continuous connection to the Internet for mobile phone and computer users with high data rates to enable multimedia Web sites and applications to be used.

The mobile device 100 has an operating system that supports a client application. The operating system is able to support graphical display and textual inputs from the user. The platform may be for example, a Symbian or Linux®^{*} operating system or MIDP (mobile information device profile) enabling functionality of the mobile device 100. The client application can be ported into any suitable platform.

Optionally, the mobile device 100 can receive rich graphics and will have at least 8MB of memory and the ability to run applications of size greater than 64K. However, the described system can be implemented on simple mobile devices. Preferably such devices support persistent connection and graphical display and textual input.

A user of the mobile device 100 can input an information request 106 using the input mechanism 104 and the user interface 102. The client application of the mobile device 100 provides a form for the information request 106 in which a user can provide details of the requested information expressed in free text. A context for the information can also optionally be provided by the user.

The information request 106 can be sent to any one or more of multiple channels which use different information discovery technologies. In the described embodiments three forms of channel are described namely: instant messaging 108; topic-based discussions 110; and searches 112. However, any two of these channels or additional channels which may become available with new technology could also be used. The described method and system provides a one stop point for information discovery using any one or more of these multiple channel technologies. A single information request 106 can be sent simultaneously to each of the channels.

The first channel described uses instant messaging technology 108 to direct the information request 106 to actual people identified by the user. The people can be selected by the user from a contact or "buddy" list. The user of this channel for information discovery will initiate a concurrent instant messaging session with multiple people if more than one is selected.

The second channel directs the information request 106 to public discussion groups 110. The information request is posted as an entry to the newsgroup/forum etc.

The third channel directs the information request 106 to information repositories, where the query is expressed as search request 112.

Using the multiple channels provides a means for mobile information discovery and collaboration to mobile workers using a mobile device 100. Discovery can be carried out by searches through local and remote contents and collaboration can be achieved by interaction with peers and experts. The multiple channels can be used singly or in parallel to accelerate obtaining responses to a single input of an information request.

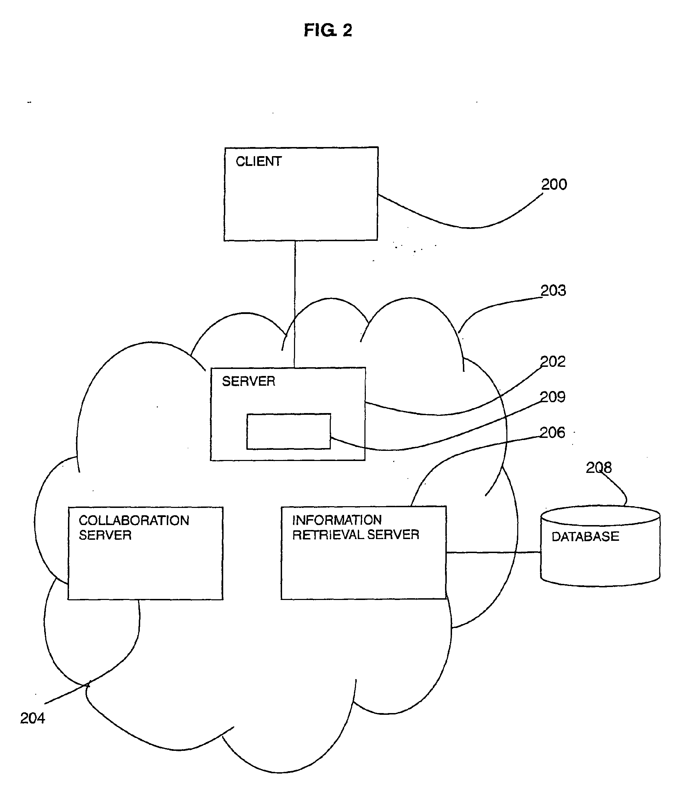

Referring to Figure 2, a client application 200 is supported by a mobile device 100. The client application 200 may be customised to suit individual user's needs. The client application 200 communicates using the communication means of the mobile device 100 with a server 202. The server 202 may be a knowledge management product for example as provided by International Business Machines Corporation such as the Lotus®^{**} Discovery Server (LDS) or the WebSphere®^{**} Portal Server (WPS) through WebSphere Everyplace Assess (WEA).

The server 202 manages the information requests 106 sent by the client application 200. The client application 200 subscribes to the server 202 in order to use the server 202 operations. The server 202 is connected via a network 203 to other servers. For example, the network 203 may be the Internet and the server 202 can access any resources available on the Internet.

The server 202 has storage means 209 for storing all incoming and outgoing data relating to an information request from a client application 200.

The server 202 processes information requests received from the client application 200 using one or more of the multiple channels as indicated by the client application 200. The server 202 sends simple events to the client application 200 indicating that new data has arrived from one of the channels. Initially, the server 202 sends only the title information of the data to the client application 200 and stores the entire data result in the storage means 209.

The user of the mobile device decides and indicates via the client application 200 when to retrieve the entire data result. This behaviour is customisable for each of the channels such that the client application 200 can dictate different procedures for each form of channel used.

The client application 200 can be set up to receive the full data each time it arrives or to receive an empty notification specifying that there is something new in the specified channel. In this way the client application 200 does not have to deal with potentially large amount of data.

Additionally, the client application 200 maintains a sliding data window such that when displayed data exceeds the client application's memory capacity, the data is dropped and new data is received instead. For example, if a mobile device is capable of containing 50K of data, when some results are being read and the amount displayed already exceeds 50K, the client application 200 will drop the already displayed data and bring a new set of data from the server 202 for display.

Figure 2 shows the server 202 in communication with a collaboration server 204 through which instant messaging can take place and an information retrieval server 206 for searching for information relating to the information request 106. The information retrieval server 206 can access databases 208 either directly or via network connections to search for information.

The client application 200 algorithm is as follows:

1. Let the user specify a topic and details for the information request 106.

2. Let the user choose available channels:

1. Instant Messaging 108 - let the user choose known people from a buddy list;

2. Discussion forums 110 - let the user choose from a variety of discussion forums - synchronous or asynchronous;

3. Distributed databases 112 - let the user choose databases to search in, including the Internet or any corporate database.

3. Send the topic with details to the server 202.

4. If the user is willing, subscribe to any available forums to receive notifications about new topics.

5. When some results are received from the server 202, notify the user and display them per request.

The server 202 algorithm is as follows:

1. Receive request from the client application 200.

2. Process the request:

1. If instant messaging is chosen, send the topic, concatenated with details to all selected people as an instant message through a collaboration server 204. If there is more than one person selected, make it a conference (N-way) message.

2. If discussion forums are chosen, build a new forum message in the format Topic: <topic> Details: <details> and send it to the specified forums. Subscribe to the newly posted topic, so updates made to it, can be posted to the requesting client application 200.

3. If databases are chosen, send the request to the information retrieval server 206 and wait for results.

3. Once an update message is received from any of the three channels, send an appropriate message to the requesting client application 200.

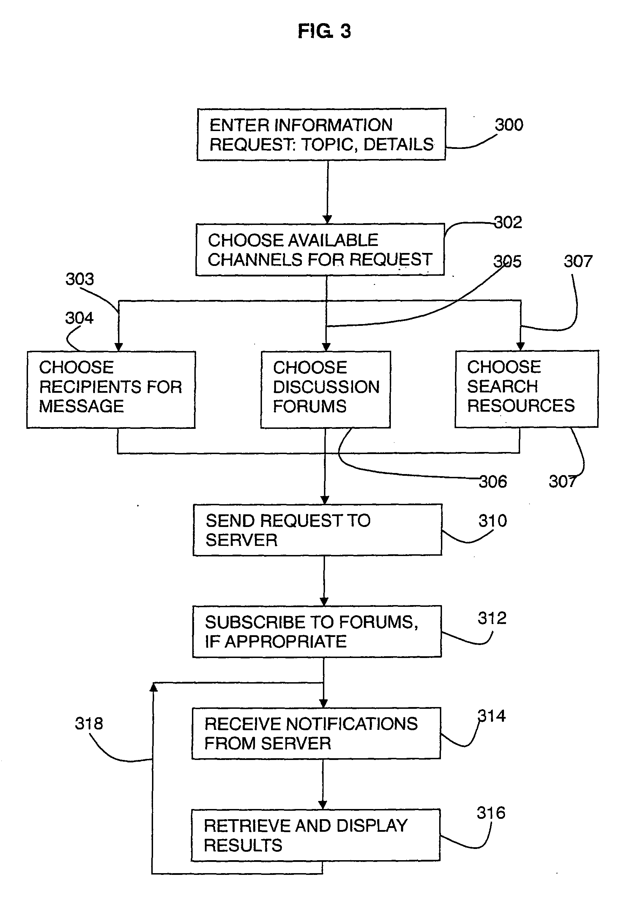

Referring to Figure 3, a flow diagram of the client application 200 actions is shown. At the first step 300 in the process, an information request is input into the mobile device indicating a topic and details. The client application will ask the user to choose 302 from the available channels for the information request, namely the channels of messaging, discussion and search.

If the channel for messaging is chosen 303 the client application will ask the user to choose 304 the people to which the message is to be sent. Predefined lists can be used and a default to send to particular people can be programmed.

If the channel for discussion is chosen 305, the client application will ask the user to select 306 the discussion forums which should be used. Again, a default list of forums could be specified in the client application.

If the channel for search is chosen 307, the client application will ask the user to select 308 databases or resources for searching. Again, the selection of databases or resources can be predefined with a default selection.

Once the channels and resources within the channels have been defined, the information request is sent to the server 310 by the client application. The client application may subscribe 312 to available forums to receive notification about new topics.

When a result is available from the server, a notification 314 is received by the client application. The client application can request and display the results 316 when appropriate. The policy for receiving results can be pre-set for a particular user. The client application then waits for further notifications (illustrated by the loop 318).

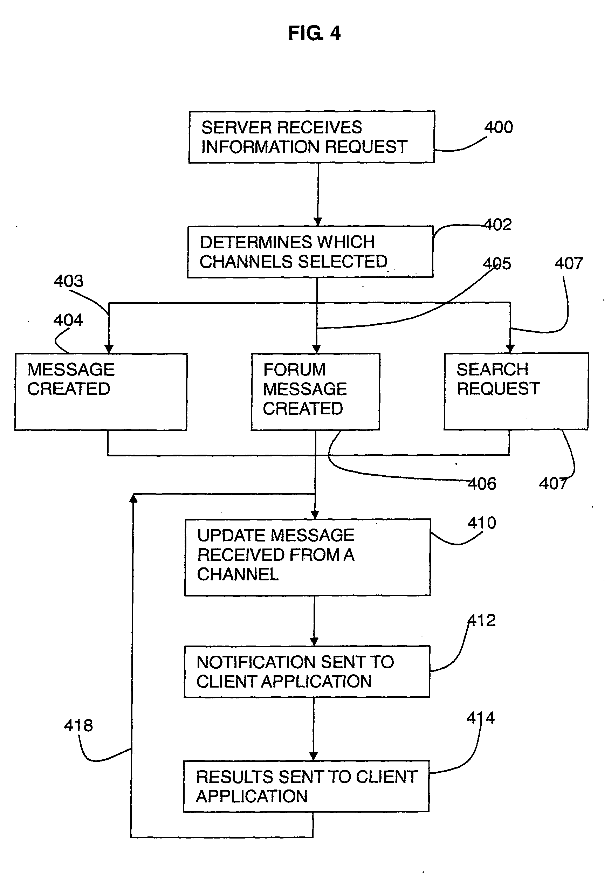

Referring to Figure 4, a flow diagram of the actions of the server 202 is shown. An information request is received 400 from a client application. The server determines 402 from the request which of the three channels has been specified for use.

If the channel for messaging has been chosen 403, a message is created 404 including the topic and details to all the selected recipients through a collaboration server.

If the channel for discussion has been chosen 405, a new forum message is created 406 including the topic and details. A subscription is also made to the newly posted topic.

If the channel for search has been chosen 407, the information request 408 is sent to the information retrieval server.

When an update message is received 410 from any of the three channels, a notification 412 is sent to the client application. When the client application responds to the notification, the results are sent 414 to the client application. The server continues to wait for further results 410 from the three channels (shown by the loop 416) and sends further notifications 412 to the client application.

Push technology is used to send the answers back to the client application from the server. Push technology sends results back to the client application at the instigation of the server. This relieves the client application from having to actively retrieve information from the server.

The client application is notified about search results, updated instant messaging sessions and updated relevant thread in discussion forums. In addition, all the information is stored on the server, allowing the user to receive information notifications both synchronously and asynchronously.

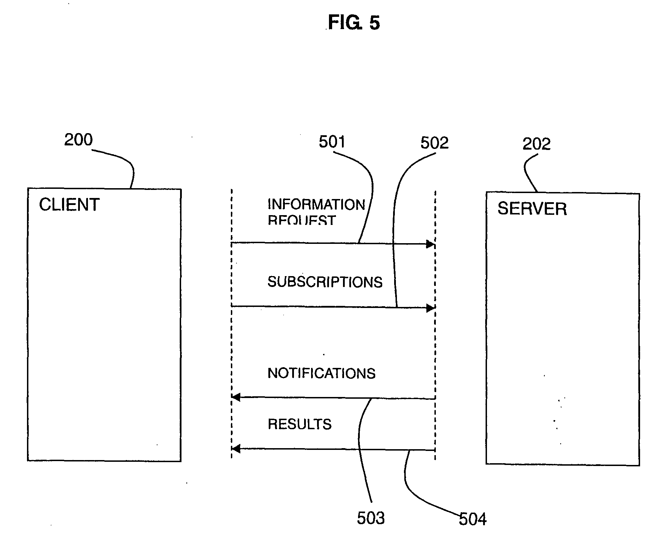

Figure 5 shows the interaction between the client application 200 and the server 202. The server 202 manages and stores the results of the information requests carried out for a client application 200.

An information request 501 is sent from the client application 200 to the server 202. Subscriptions 502 to discussion forums are made by the client application 200 where appropriate for an information request. Notifications 503 are sent from the server 202 when a result is received at the server 202 to an information request. The result could be a search result, a return instant message, or a new thread in a discussion forum. The client application 200 can dictate when to receive the actual results 504 notified in a notification 503.

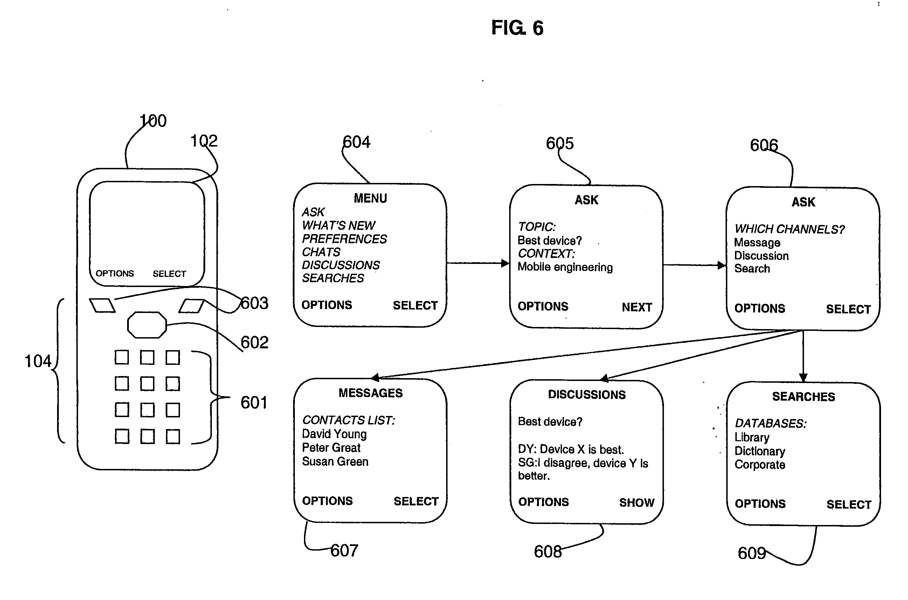

An embodiment is now described of the user interface of the client application 200 of a mobile device 100. It will be appreciated that mobile devices 100 which can be used in accordance with the described method and system come in a wide range of different physical forms with different functions and operating systems. A mobile device 100 is illustrated in Figure 6 as an example only with a graphical user interface in the form of a display screen 102 and input means 104 consisting of a numerical key pad 601 including text input means and buttons 602, 603 for paging through displays and selecting options displayed on the screen 102.

Examples of screen displays are shown in Figure 6. The displays shown are by no means exhaustive and merely show a selection of possibilities to further illustrate the described method and system.

A first display 604 shows a menu which includes an option of "ASK" for inputting a new information request. If this option is selected using a selection button 603 of the input means 104, a second display 605 is brought up onto the screen 102 which allows a user to enter details of the information request in free text. In this example, the input is in the form of a topic and a context.

The form of entry of the information request may differ but generally a user can enter a query once in free text and it can be sent to multiple resources. This is the only stage where the user should spend time interacting with the keypad. Once the information request has been entered, the user can access people or information repositories via quick menus and simple key clicks.

A third display 606 shows the options of sending the information request using different channels to information resources. The three possible channels are shown of sending a message to a contact, a discussion in a forum or persistent chat room and/or a search in various databases. Any combination of the possible channels can be selected so that the information request can be sent by a single channel or a combination of two channels or by all three channels.

Depending on the selection of channels made by a user, a number of further displays are available. Figure 6 shows a messages display 607 in which a user can select recipients of a message from a contacts list. A discussion display 608 shows an ongoing discussion in which the user is a participant. A search display 609 shows a list of possible databases which could be searched.

A contacts or "buddy" list can be stored on the mobile device or a list stored on a remote computer can be accessed from the mobile device.

When a discussion is being conducted, the discussion can be a one to one discussion or a multiple-user discussion. Synchronous discussions can be participated in intermittently using persistent chat technology. Awareness clues can be provided including an indication that the user is entering a response, a user status and a participant list.

Incoming resources are managed by a user for example by opening, participating and closing a discussion and by managing search results.

The ability to link multiple channels into a common front end provides substantive value over approaching each channel independently. The described method and system overcomes the difficulties of input on small form factor devices by allowing a single input to be used for multiple channels and further allows the channels to be exercised in parallel.

One key advantage of the described method and system is that the user does not have to decide ahead of time which information discovery paradigm is the most appropriate. This is especially important in a mobile form where the most tedious stage for users is the input of details of an information request when the user expresses his needs.

In systems which require a user to first determine which channel is best for an information request and then to formulate the request, the user must laboriously re-enter the request if an unacceptable response results. Each unacceptable response involves delay and latency and additional input. The described method and system allows the server to mediate to eliminate these disadvantages.

The method and system are described in relating to three channels of messaging, discussion and searches. The described method and system apply to multiple channels and any additional forms of information discovery channel can be applied as further channels without departing from the scope of the present invention. Similarly only two of the described channels could be used.

Improvements and modifications can be made to the foregoing without departing from the scope of the present invention.

* Linux is a trademark of Linus Torvalds in the United States of America, other countries, or both

** Lotus and Websphere are trademarks of International Business Machines Corporation in the United States of America, other countries, or both

## Claims

1. A system of mobile information discovery comprising: a mobile device (100) including a display means (102) and an input means (104); a server (202) for managing an information request (106) sent from the mobile device (100); wherein an information request (106) input once into the mobile device (100) is capable of being sent singly or in parallel to a choice of multiple information discovery channels (108, 110, 112) managed by the server (202); the server (202) includes storage means (209) for results of the information request and means for returning the results to the mobile device (100).

2. A system as claimed in claim 1, wherein the mobile device (100) has connection means for connection to the server (202) wherein the connection means supports a persistent connection to a network.

3. A system as claimed in claim 1 or claim 2, wherein the multiple information discovery channels (108, 110, 112) are search means, messaging means and discussion means.

4. A system as claimed in any one of claims 1 to 3, wherein the input means (104) enables textual inputs and the information request is input in the form of free text.

5. A system as claimed in any one of the preceding claims, wherein the multiple information discovery channels (108, 110, 112) obtain information from information resources in the form of people and data repositories (204, 206, 208).

6. A system as claimed in any one of the preceding claims, wherein the results are in the form of search results, return messages and threads in a discussion.

7. A system as claimed in any one of the preceding claims, wherein the server (202) is a knowledge management server connected by a network (203) to information resources (204, 206, 208).

8. A method of mobile information discovery comprising: inputting an information request (106) once into a mobile device (100); selecting one or more forms of information discovery channel (108, 110, 112) by which to process the information request from a multiple of information discovery channels, the information request (106) being sent singly or in parallel to the information discovery channels; the information request (106) being managed by and the results stored in a server (202); and the results being returned to the mobile device (100).

9. A method as claimed in claim 10 or claim 11, wherein the multiple information discovery channels (108, 110, 112) are search, messaging and discussion.

10. A method as claimed in claims 8 or 9, wherein the method includes selecting one or more information resource to which the information request is to be sent for each selected information discovery channel (108, 110, 112).

11. A method as claimed in claim 9 or claim 10, wherein if the information discovery channel is a search (112), the information repositories through which the search is to be conducted are selected by input into the mobile device (100).

12. A method as claimed in claim 9 or claim 10, wherein if the information discovery channel is messaging (108), the information resources in the form of people are selected by input into the mobile device (100).

13. A method as claimed in claim 9 or claim 10, wherein if the information discovery channel is discussion (110), the information resources in the form of discussion forums are selected by input into the mobile device (100).

14. A method as claimed in any one of claims 8 to 13, wherein an indication of a result is sent to the mobile device (100) followed by the result when requested.

15. A method as claimed in any one of claims 8 to 14, wherein the server (202) receives an information request (106) from the mobile device (100), processes the information request (106) by sending it by means of the selected information discovery channels to the selected information resources, and the server (202) receives, manages and returns results of the information request to the mobile device (100).

16. A computer program comprising program code means adapted to perform the method of any of claims 8 to 15 when said program is run on a computer.
